# EUROPEAN PATENT SPECIFICATION

(11) **EP 2 871 434 B1**
(45) Date of publication and mention of the grant of the patent: **01.01.2020**
(21) Application number: 14192127.0
(22) Date of filing: 06.11.2014
(51) Int. Cl.: F28F 1/30, B21D 53/08

(54) **Heat exchanger and method of manufacturing the same**
Wärmetauscher und Verfahren zu seiner Herstellung
Échangeur de chaleur et son procédé de fabrication

(30) Priority: 07.11.2013 KR 20130134950
(43) Date of publication of application: 13.05.2015
(73) Proprietor: LG Electronics Inc., Yeongdeungpo-gu Seoul 150-721 (KR)
(72) Inventor: Lee, Juhyoung, 642-711 Gyeongsangnam-do (KR); Bae, Seongwon, 642-711 Gyeongsangnam-do (KR)
(74) Representative: Vossius & Partner Patentanwälte Rechtsanwälte mbB

(56) References cited:
- WO-A1-2013/001744
- WO-A1-2013/073947
- FR-A- 322 471
- FR-A- 380 890
- JP-A- H05 302 791
- JP-A- 2013 113 486
- US-A1- 2005 155 750

## Description

### BACKGROUND OF THE INVENTION

### 1. Field of the Invention

The present invention relates to a heat exchanger and a method of manufacturing the same, and particularly, to a heat exchanger that includes a coolant tube and a fin coupled with the coolant tube and a method of manufacturing the same.

### 2. Description of the Conventional Art

In general, a heat exchanger is an apparatus for heat exchanging a coolant with air and may include a coolant tube through which a coolant flows and a fin for maximizing the contacting area of air, wherein the coolant tube may be coupled with the fin.

Typically, heat exchangers primarily used for air conditioning may be classified into tube-type heat exchangers and multi-channel flat tube-type heat exchangers.

The coolant tube for fin tube-type heat exchangers may be widely formed of a copper alloy, and is often being formed of an aluminum alloy in recent years. The fin for fin tube-type heat exchangers may be formed of an aluminum alloy, and the surface of the fin may be coated for better corrosion resistance and water flowability.

In a fin tube-type heat exchanger, a circular coolant tube may be assembled into a fin, and in this case, an assembling process for assembling the coolant tube with the fin and a tube expanding process of tube-expanding the coolant tube may be required. In order to assemble the coolant tube with the fin, the outer diameter of the coolant tube should be smaller than the inner diameter of the collar of the fin, and upon the tube expanding process, an outer diameter portion of the coolant tube may be brought in tight contact with an inner diameter portion of the fin collar.

In the fin tube-type heat exchanger, after assembling the fin with the coolant tube, a branched tube or a return bend may be connected with each coolant tube in order to configure a flow path through which a coolant flows.

In the fin tube-type heat exchanger, the coolant tube may be connected with the branched tube by brazing, or the coolant tube may be connected with the return bend by brazing.

In the conventional fin tube-type heat exchanger, upon brazing connection, torch brazing may be typically used, and in such case, each brazing-connected portion is subjected to individual brazing.

Meanwhile, in the conventional heat exchanger, the fin collar is brought in contact with the coolant tube by the tube expanding process, further complicating the working process for manufacturing the heat exchanger while increasing a defect rate.

FR 322 471 A discloses a heat exchanger according to the preamble of claim 1.

### SUMMARY OF THE INVENTION

An object of the present invention is to provide a heat exchanger that may simplify a manufacturing process of the same while minimizing a defect rate.

To achieve the above objects, according to the present invention, there is provided a heat exchanger as defined in the claim.

### BRIEF DESCRIPTION OF THE DRAWING

Fig. 1 is a front view illustrating a heat exchanger according to an example (not being claimed),
Fig. 2 is a perspective view illustrating a heat exchanger with a portion thereof cut away, according to an example (not being claimed),
Fig. 3 is a cross-sectional view schematically illustrating a heat exchanger before a fin is coupled with a tube, according to an example (not being claimed),
Fig. 4 is a cross-sectional view schematically illustrating a heat exchanger when a tube is inserted into a fin, according to an example (not being claimed),
Fig. 5 is a cross-sectional view schematically illustrating the fin and the tube of Fig. 3, when the fin and the tube are connected,
Fig. 6 is an expanded cross-sectional view illustrating a slot formed in a coolant tube of a heat exchanger according to an example (not being claimed),
Fig. 7 is an expanded perspective view illustrating a fin collar of a heat exchanger according to an embodiment of the present invention,
Fig. 8 is a view illustrating the fin and coolant tube of Fig. 7, when the coolant tube contacts the fin, and
Fig. 9 is a flowchart illustrating a method of manufacturing a heat exchanger.

### DETAILED DESCRIPTION OF THE PREFERRED EMBODIMENT

Hereinafter, a heat exchanger according to an embodiment of the present invention is described with reference to the accompanying drawings.

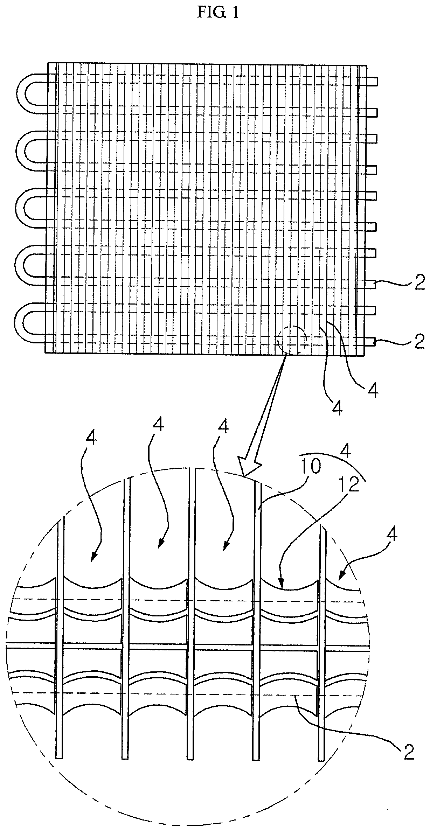

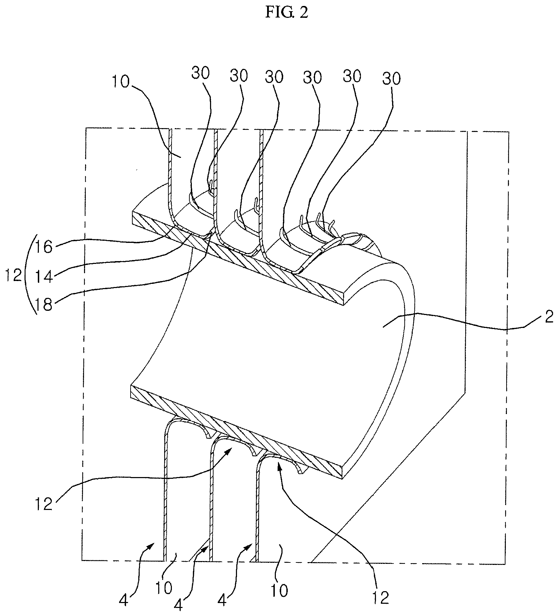

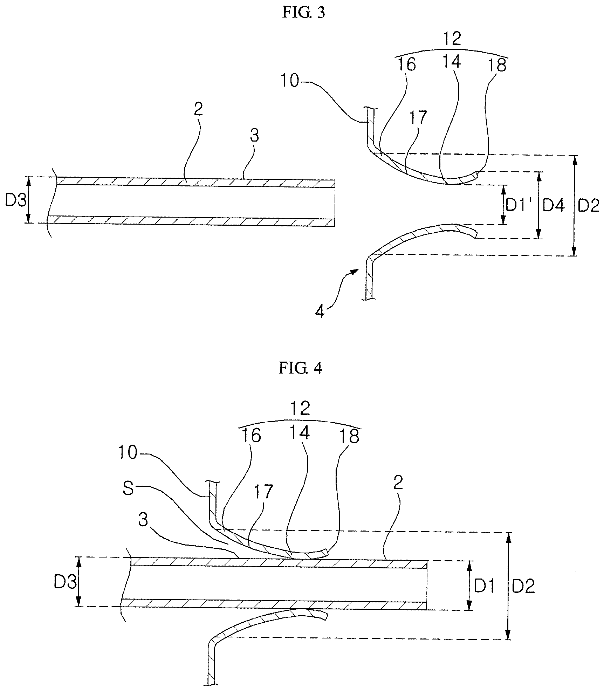

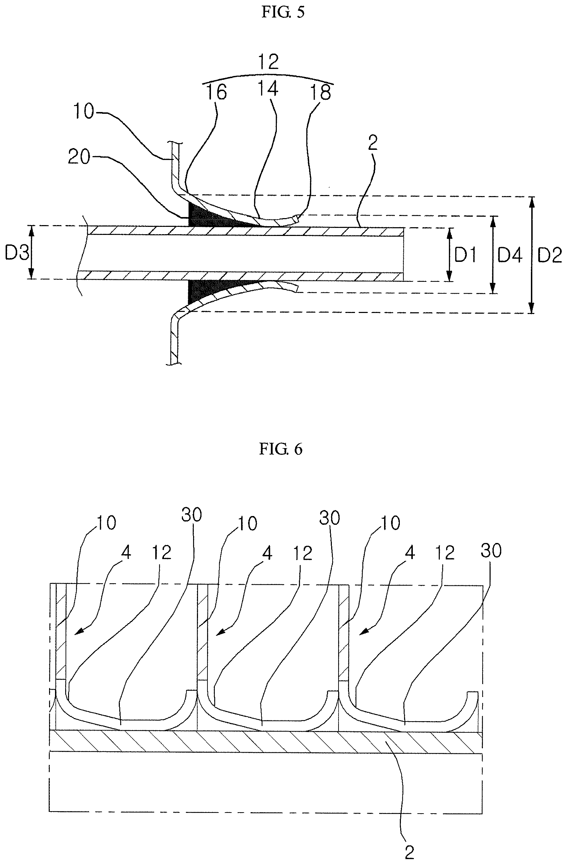

Fig. 1 is a front view illustrating a heat exchanger according to an example (not being claimed), Fig. 2 is a perspective view illustrating a heat exchanger with a portion thereof cut away, according to an example (not being claimed), Fig. 3 is a cross-sectional view schematically illustrating a heat exchanger before a fin is coupled with a tube, according to an example (not being claimed), Fig. 4 is a cross-sectional view schematically illustrating a heat exchanger when a tube is inserted into a fin, according to an example (not being claimed), and Fig. 5 is a cross-sectional view schematically illustrating the fin and the tube of Fig. 3, when the fin and the tube are connected. Fig. 6 is an expanded cross-sectional view illustrating a slot formed in a coolant tube of a heat exchanger according to an example (not being claimed).

According to this example, a heat exchanger includes a coolant tube 2 and a fin 4. The heat exchanger may include a plurality of coolant tubes 2 and a plurality of fins 4. The fins 4 may be coupled with the plurality of coolant tubes 2. The coolant tubes 2 may be arranged to pass through the plurality of fins 4 and may be coupled with the plurality of fins 4. In the heat exchanger, the fins 4 may be coupled with the plurality of coolant tubes 4. The coolant tubes 2 may be arranged to be elongated in left and right directions, and in this case, the plurality of coolant tubes may be arranged to be spaced apart from each other in upper and lower directions. The fins 4 may be arranged to be elongated in a vertical, and in this case, the plurality of coolant tubes 2 may be arranged to be spaced apart from each other in left and right directions. Each coolant tube 2 may be bent in the shape of the letter "U," and in this case, the coolant tube 2 may include a pair of straight tube parts and a U-shaped bend connecting the pair of straight tube parts with each other.

The plurality of fins 4 may be sequentially arranged along the coolant tubes.

Each fin 4 includes a plate part 10 and a collar 12 projected from the plate part 10 and coupled with a coolant tube 2. The collar 12 may be a coolant tube coupling part coupled with the coolant tube 2, and the plate part 10 may be a heat exchanging part that increases the heat transfer area between the coolant and air and which allows heat to be transferred between the coolant and air. Heat may be transferred from the coolant through the collar 12 to the plate part 10 and may be transferred through the collar 12 and the plate part 10 to surrounding air thereof. In contrast, heat may be transferred from air to the plate part 10 and the collar 12, heat may be transferred from the plate part 10 to the collar 12, and heat may be transferred from the collar 12 to the coolant tube 2. Each fin 4 may include a single plate part 10 and a plurality of collars 12 projected therefrom, and the plurality of collars 12 may be spaced apart from each other at an interval between the coolant tubes 2.

In the heat exchanger, the coolant tube 2 may be formed of copper, and the fin 4 may be formed of aluminum, or both the coolant tube 2 and the fin 4 may be formed of aluminum. As used herein, the term "copper" refers to a copper alloy as well as pure copper, and the term "aluminum" refers to an aluminum alloy as well as pure aluminum.

In case the coolant tube 2 and fin 4 of the heat exchanger are formed of copper and aluminum, respectively, the material costs may be increased as compared with when the coolant tube is formed of aluminum, and the coolant tube 2 should be tube-expanded by a tube expanding process, with the copper of the coolant tube 2 disposed to pass through the fin 4. In such case, the capability of the heat exchanger may be decreased due to contact thermal resistance generated upon the tube expanding process, and corrosion may occur due to a potential difference between the coper coolant tube 2 and the aluminum fin 4, which may reduce capability.

In contrast, when the coolant tube 2 and the fin 4 both of the heat exchanger are formed of aluminum, costs may be reduced as compared with copper applies to the coolant tube. Further, the corrosion that may occur in the case of copper coolant tubes may be addressed. Preferably, the heat exchanger is configured as an aluminum fin tube-type heat exchanger in which the coolant tube 2 and the fin 4 both are formed of aluminum.

Meanwhile, the coolant tube 2 and the fin 4 may be coupled with each other by brazing, and the coolant tube 2 and the fin 4 may be connected with each other by furnace brazing or torch brazing. Since torch brazing may bring up a higher defect rate than furnace brazing, and an increase in size of heat exchanger leads to an increase in the number of brazing connected portions, the defect rate may be raised. Further, torch brazing uses more flux, and after brazing, an excessive amount of flux may remain on the surface of the heat exchanger. Such remaining flux may harm the human body.

In contrast, furnace brazing is conducted by heating in the furnace, and does not use flux. Accordingly, cost savings and better quality of products may be achieved. Accordingly, it is preferable to connect the coolant tube 2 with the fin 4 by furnace brazing. In the heat exchanger, it is preferable to connect the coolant tube 2 with the fin 4 without a tube expanding process for tube expanding the coolant tube 2.

Each collar 12 may include a coolant tube contacting part 14 and a coolant tube non-contacting part 16. The inner diameter D1 of the coolant tube contacting part 14 is smaller than the inner diameter D2 of the coolant tube non-contacting part 16 and may come in contact with an outer surface of the coolant tube 2. Before insertion of the coolant tube 2, the inner diameter D1' of the coolant tube contacting part 14 may be smaller than the outer diameter D3 of the coolant tube 2. Upon insertion of the coolant tube 2, the coolant tube contacting part 14 may be elastically deformed to come in contact with the coolant tube 2. Upon insertion of the coolant tube 2, the inner diameter D1 of the coolant tube contacting part 14 may be rendered to be equal to the outer diameter D2 of the coolant tube 2 due to elastic deformation. The inner diameter D2 of the coolant tube non-contacting part 16 is larger than the outer diameter D3 of the coolant tube 2 and may not come in contact with an outer surface of the coolant tube 2. The coolant tube non-contacting part 16 may not come in contact with the outer surface of the coolant tube 2 regardless of before or after insertion of the coolant tube 2. Each collar 12 may further include a tube expanded end part 18 having a diameter D4 larger than the coolant tube contacting part 14.

In the heat exchanger, the collar 12 may be shaped to have a gradient along a direction in which the coolant tube 2 is inserted. The minimum inner diameter D1' of the collar 12 may be smaller than the outer diameter of the coolant tube 2, and the maximum inner diameter D2 of the collar 12 may be larger than the outer diameter of the coolant tube 2. The collar 12 may have a tolerance enough to allow for easy insertion of the coolant tube 2. In this case, the collar 12 may be elastically deformed by a force generated when the coolant tube 2 is inserted through the collar 12, and the contact between the coolant tube 2 and the collar 12 may be maintained by an elastic restoring force while the outer diameter of the coolant tube 2 and the minimum inner diameter of the collar 12 may remain concentric. The contact-type collar 12 having gradients do not be adapted to have a too large or small clearance, and a connecting material 20 to be described below may infiltrate up into a point where the optimal gap is obtained to thereby make a connection.

The coolant tube contacting part 14 may include a part with the minimum inner diameter of the collar 12. The coolant tube contacting part 14 may be positioned between the coolant tube non-contacting part 16 and the tube expanded end part 18. The coolant tube contacting part 14 may be extended from the coolant tube non-contacting part 16 in a longitudinal direction of the collar 12. The coolant tube contacting part 14, when the coolant tube 2 is inserted therethrough, may be elastically expanded by the coolant tube 2 to have an increased entire diameter, and the coolant tube contacting part 14 may be brought in tight contact with the coolant tube 2. The coolant tube contacting part 14 may be a small diameter part with the minimum diameter of the collar 12.

The coolant tube non-contacting part 16 may include a part with the maximum inner diameter of the collar 12. The coolant tube non-contacting part 16 may be a large diameter part with a diameter larger than the coolant tube contacting part 14. In contrast, the coolant tube contacting part 14 may be a small diameter part with a diameter smaller than the coolant tube non-contacting part 16. The collar 12 may be configured so that the large diameter part is graded towards the small diameter part. The diameter of the coolant tube non-contacting part 16 may decrease towards the coolant tube contacting part 14. The coolant tube non-contacting part 16 may be formed to be graded between the plate part 10 and the coolant tube contacting part 14. The coolant tube non-contacting part 16 may function as a coolant tube guide for guiding the coolant tube 2 when the coolant tube 2 is inserted along the coolant tube contacting part 14. The coolant tube non-contacting part 16 may be projected from the plate part 10. The diameter of the coolant tube non-contacting part 16 may decrease towards the coolant tube contacting part 14. The coolant tube non-contacting part 16 may be adapted so that an inner circumferential surface of the coolant tube non-contacting part 16 faces an outer surface of the coolant tube 2 when the coolant tube 2 is inserted therethrough. A space S where a connecting material 20 is positioned may be formed between the coolant tube non-contacting part 16 and the coolant tube 2 as shown in Figs. 4 and 5. The connecting material 20 may fill at least a portion of the space S.

The diameter of the tube expanded end part 18 may increase in an opposite direction of the coolant tube non-contacting part 16 from the coolant tube contacting part 14. The tube expanded end part 18 may be integrally formed with the coolant tube contacting part 14 before the coolant tube 2 is inserted. The tube expanded end part 18 may not come in contact with the coolant tube 2. The tube expanded end part 18 may be formed upon manufacture of the fin 4. The tube expanded end part 18 may be shaped as a bend to be rounded at the coolant tube contacting part 14. The tube expanded end part 18 may contact the plate part of another fin positioned next to the fin having the tube expanded end part 18. The tube expanded end part 18 may not contact the coolant tube non-contacting part of another fin positioned next to the fin having the tube expanded end part 18. The tube expanded end part 18 may function to prevent damage to the coolant tube 2 when the coolant tube 2 is inserted along the coolant tube contacting part 14, and the tube expanded end part 18 may be deformed along with the coolant tube contacting part 14 when the coolant tube contacting part 14 is expanded.

The heat exchanger includes a connecting material 20 between an inner surface 17 of the coolant tube non-contacting part 16 and an outer surface 3 of the coolant tube 2. The connecting material 20 may be a filler metal for connecting the collar 12 with the coolant tube 2. The filler metal of the connecting material 20, which is formed on the whole or part of an outer surface of the coolant tube 2 may allow the inner surface 17 of the coolant tube non-contacting part 16 to be connected with the outer surface of the coolant tube 2. The filler metal forms cladding with a low melting point on the coolant tube 2. As the temperature rises in the furnace brazing process, the cladding is melt to serve as a filler metal. In case the coolant tube 2 is formed of a 3-series aluminum alloy, the filler metal may be formed of a 4-series aluminum alloy and may be formed on an outer surface of the coolant tube 2. The connecting material 20 may be adapted so that the filler metal formed on the fin 4 bonds the inner surface 17 of the coolant tube non-contacting part 16 with the outer surface of the coolant tube 2 between the outer surface 3 of the coolant tube 2 and the inner surface 17 of the coolant tube non-contacting part 16. In case the fin 4 is formed of a 3-series aluminum alloy, the filler metal may be formed of a 4-series aluminum alloy and may be formed on the coolant tube 4. The filler metal may be adapted so that the cladding formed on the plate part 10 may be melted as the temperature rises in the furnace brazing process and may infiltrate into a space between the inner surface 17 of the coolant tube non-contacting part 16 and the outer surface 3 of the coolant tube 2, thereby bonding the outer surface 3 of the coolant tube 2 with the inner surface 17 of the coolant tube non-contacting part 16. The filler metal may be adapted so that the cladding formed on an inner circumferential surface of the coolant tube non-contacting part 16 may be melted as the temperature rises in the furnace brazing process to bond the outer surface 3 of the coolant tube 2 with the inner surface 17 of the coolant tube non-contacting part 16.

The collar 12 of the fin 4 may have a long slot 30 in a longitudinal direction of the collar 12. The slot 30 may be extended in a direction parallel with the longitudinal direction of the coolant tube 2. The slot 30 may be opened in a radius direction of the collar 12. The slot 30 may communicate with the space S between the coolant tube non-contacting part 16 and the coolant tube 2. The slot 30 may be extended up to an end part of the collar 12 from the plate part 10. The slot 30 may be extended from a periphery of the coolant tube non-contacting part 16 of the plate part 10 up to the coolant tube non-contacting part 16, the coolant tube contacting part 14, and the tube expanded end part 18. The slot 30 may not be formed at, at least one, of the plate part 10 or tube expanded end part 18. The slot 30 may be shaped so that an end thereof facing the plate part 10 is closed. The slot 30 may be shaped so that the other end thereof facing the tube expanded end part 18 is closed. A plurality of slots 30 may be formed in the collar 12, and the plurality of slots 30 may be spaced apart from each other in a circumferential direction of the collar 12. The slot 30 may function as a pathway through which air is discharged. Unless the slot 30 is formed in the collar 12, an air trap may be generated between the collar 12 and the coolant tube 2. The slot 30 functions as an air discharge passage aiding in air discharge, thus preventing an air trap from being generated. Meanwhile, the collar 12 should be easily elastically deformed upon insertion of the coolant tube 2. The slot 30 may aid in such elastic deformation.

In case the heat exchanger includes a plurality of slots 30, a plurality of collar parts with the slot 30 positioned therebetween may form the collar 12. In this case, the plurality of collar parts may be spaced apart from each other in a circumferential direction along an outer circumferential surface of the coolant tube 2. The plurality of collar parts each may include a coolant tube contacting part contacting an outer surface of the coolant tube 2 and a coolant tube non-contacting part not contacting the outer surface of the coolant tube. Each of the plurality of collar parts may be connected with the coolant tube 2 by a connecting material 20 positioned between an inner surface of the coolant tube non-contacting part and an outer surface 3 of the coolant tube 2.

In the heat exchanger according to the instant example, the coolant tube 2 and the collar 12 may be brought in tight contact with each other by elastic deformation of the collar 12 and resultant contact between the collar 12 and the coolant tube 2, and even without a tube expanding process for tube expanding the coolant tube 2, the coolant tube 2 and the fin 4 tightly contacted as described above may be connected with each other by furnace brazing.

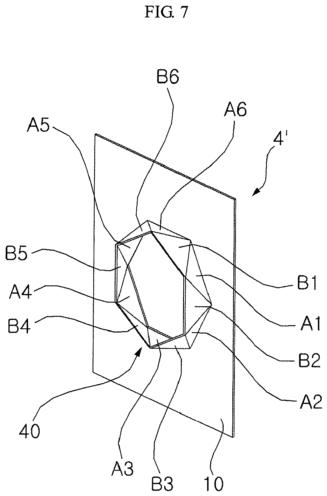

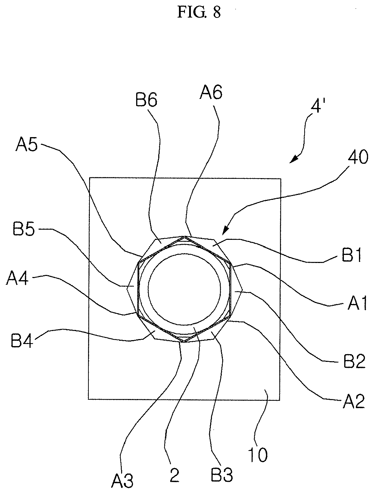

Fig. 7 is an expanded perspective view illustrating a fin collar of a heat exchanger according to an embodiment of the present invention, and Fig. 8 is a view illustrating the fin and coolant tube of Fig. 7, when the coolant tube contacts the fin.

In this embodiment, the heat exchanger may include a coolant tube 2 and a fin 4' having a collar 40 contacting the coolant tube 2 and projected from a plate part 10. The collar 40 may include a coolant tube non-contacting part projected from the plate part 10 and having a plurality of triangular collar parts A1, A2, A3, A4, A5, and A6. The collar 40 includes a coolant tube contacting part having a plurality of collar parts B1, B2, B3, B4, B5, and B6 each shaped as an inverted triangle, which are formed between the plurality of collar parts A1, A2, A3, A4, A5, and A6 and contacting the coolant tube 2 upon insertion of the coolant tube 2.

In this embodiment, other configurations and operations of the collar 40 than the shape of the collar 40 may be the same or similar to the above-described example, and the same reference denotations are used, and detailed description thereof is skipped.

A portion of each of the plurality of collar parts B1, B2, B3, B4, B5, and B6 of the coolant tube contacting part may contact an outer surface of the coolant tube 2. When passing through the collar 40, the coolant tube 2 comes in contact with each of the plurality of collar parts B1, B2, B3, B4, B5, and B6 of the coolant tube contacting part, thus elastically deforming each of the plurality of collar parts B1, B2, B3, B4, B5, and B6 of the coolant tube contacting part.

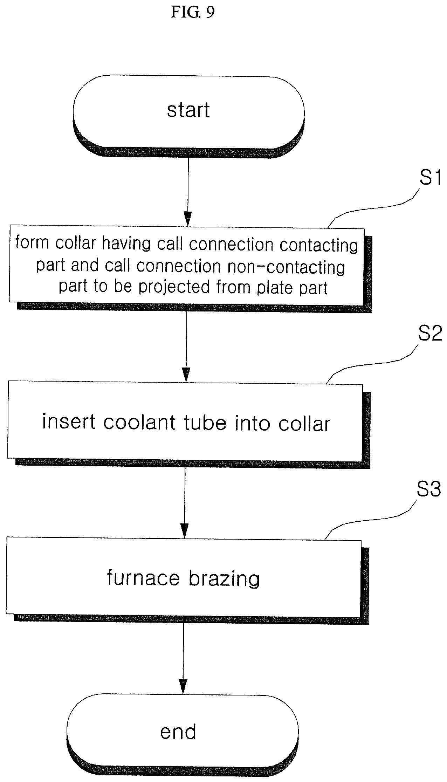

Fig. 9 is a flowchart illustrating a method of manufacturing a heat exchanger.

Accordingly, a method of manufacturing a heat exchanger comprises a fin forming step (S1), a coolant tube inserting step (S2), and a furnace brazing step (S3).

In the fin forming step (S1), a step of forming a fin 4, a collar 12 having a coolant tube contacting part 14 with an inner diameter D1 smaller than an outer diameter D3 of the coolant tube 2 and a coolant tube non-contacting part 16 with an inner diameter D2 larger than the outer diameter D3 of the coolant tube 2 as shown in Fig. 3 may be formed to be projected from a plate part 10.

In the coolant tube inserting step (S2), the coolant tube 2 may be inserted along the inside of the coolant tube non-contacting part 16 and the coolant tube contacting part 14. When the coolant tube 2 is inserted along the collar 12, the coolant tube 2 may be inserted through the coolant tube non-contacting part 16 to the coolant tube contacting part 14, and in this case, the outer surface 3 of the coolant tube 2 comes in contact with the inner surface of the coolant tube contacting part 14, elastically deforming the coolant tube contacting part 14. From the state in which the inner diameter of the coolant tube contacting part 14 is smaller than the outer diameter D3 of the coolant tube 2 as shown in Fig. 3, the coolant tube contacting part 14 may be deformed (D1'->D1=D3) to be rendered the same as the outer diameter D3 of the coolant tube 2, as shown in Fig. 4, and the coolant tube contacting part 14 may be brought in tight contact with the outer surface 3 of the coolant tube 2 by an elastic restoring force. When the coolant tube 2 is disposed to pass through the collar 12, a space S may be formed between the coolant tube non-contacting part 16 and the outer surface of the coolant tube 2 as shown in Fig. 4, wherein a connecting material 20 may be placed in the space S.

In the furnace brazing step S3, the coolant tube non-contacting part 16 and the coolant tube 2 may be subjected to furnace brazing. In the furnace brazing step S3, the coolant tube 2 and the fin 4 may be put in the furnace with the coolant tube 2 contacting the coolant tube contacting part 14. In the furnace brazing step S3, the connecting material 20 present between the inner surface 17 of the coolant tube non-contacting part 16 and the outer surface 3 of the coolant tube 2 may connect the coolant tube non-contacting part 16 with the coolant tube 2.

The connecting material 20 may be adapted so that a filler metal positioned in the space S between the coolant tube non-contacting part 16 and the coolant tube 2 is melted upon brazing to connect the coolant tube non-contacting part 16 with the coolant tube 2. The connecting material 20 may be also adapted so that a filler metal positioned outside the space S between the coolant tube non-contacting part 16 and the coolant tube 2 may be melted upon brazing and flow in the space S to connect the coolant tube non-contacting part 16 with the coolant tube 2.

## Claims

1. A heat exchanger, comprising:
a coolant tube (2); and
a fin (4') having a plate part (10) and a collar (40) projected from the plate part (10), the collar (40) coupled with the coolant tube (2), wherein the collar includes
a coolant tube non-contacting part projected from the plate part (10) and having a plurality of triangular collar parts (A1, A2, A3, A4, A5, A6);
a coolant tube contacting part having a plurality of collar parts (B1, B2, B3, B4, B5, B6),
**characterized in that**
each of the collar parts of the coolant tube contacting part is shaped as an inverted triangle and the inverted triangle collar part is formed between two adjacent triangular collar parts, wherein the plurality of inverted triangular collar parts of the coolant tube contacting part contact an outer surface of the coolant tube.

## Patentansprüche

1. Wärmetauscher, aufweisend:
ein Kältemittelrohr (2); und
eine Flosse (4'), die einen Plattenabschnitt (10) und einen von dem Plattenabschnitt (10) vorspringenden Kragen (40) hat, wobei der Kragen (40) mit dem Kältemittelrohr (2) gekoppelt ist, wobei der Kragen
einen das Kältemittelrohr nichtkontaktierenden Abschnitt, der von dem Plattenabschnitt (10) vorspringt und mehrere dreieckförmige Kragenabschnitte (A1, A2, A3, A4, A5, A6) hat;
einen das Kältemittelrohr kontaktierenden Abschnitt, der mehrere Kragenabschnitte (B1, B2, B3, B4, B5, B6) hat,
aufweist,
**dadurch gekennzeichnet, dass**
jeder der Kragenabschnitte des das Kältemittelrohr kontaktierenden Abschnitts als ein umgekehrtes Dreieck gestaltet ist und der als ein umgekehrtes Dreieck gestaltete Kragenabschnitt zwischen zwei benachbarten dreieckförmigen Kragenabschnitten gebildet ist, wobei die mehreren als ein umgekehrtes Dreieck gestalteten Kragenabschnitte des das Kältemittelrohr kontaktierenden Abschnitts eine Außenfläche des Kältemittelrohrs kontaktieren.

## Revendications

1. Échangeur de chaleur, comprenant :
un tube de fluide caloporteur (2) ; et
une ailette (4') ayant une partie plaque (10) et un collier (40) se projetant depuis la partie plaque (10), le collier (40) étant accouplé au tube de fluide caloporteur (2), dans lequel le collier inclut
une partie de non-contact avec le tube de fluide caloporteur se projetant depuis la partie plaque (10) et ayant une pluralité de parties de collier triangulaires (A1, A2, A3, A4, A5, A6) ;
une partie de contact avec le tube de fluide caloporteur ayant une pluralité de parties de collier (B, B2, B3, B4, B5, B6),
**caractérisé en ce que**
chacune des parties de collier de la partie de contact avec le tube de fluide caloporteur a la forme d'un triangle inversé et la partie de collier en triangle inversé est formée entre deux parties de collier triangulaires adjacentes, dans lequel la pluralité de parties de collier triangulaires inversées de la partie de contact avec le tube de fluide caloporteur sont en contact avec une surface extérieure du tube de fluide caloporteur.
